# EUROPÄISCHE PATENTSCHRIFT

(11) **EP 3 616 967 B1**
(45) Veröffentlichungstag und Bekanntmachung des Hinweises auf die Patenterteilung: **06.10.2021**
(21) Anmeldenummer: 19183113.0
(22) Anmeldetag: 28.06.2019
(51) Int. Cl.: B60K 37/04, B60K 35/00, B60R 11/00

(54) **FAHRZEUGBEDIENVORRICHTUNG SOWIE VERFAHREN ZUM ÄNDERN DES ANZEIGEWINKELS EINER BEDIEN- UND ANZEIGEEINRICHTUNG EINER DERARTIGEN FAHRZEUGBEDIENVORRICHTUNG**
VEHICLE CONTROL DEVICE AND METHOD FOR MODIFYING THE DISPLAY ANGLE OF AN OPERATING AND DISPLAY DEVICE OF SUCH A VEHICLE CONTROL DEVICE
DISPOSITIF DE FONCTIONNEMENT DE VÉHICULE AINSI QUE PROCÉDÉ DE MODIFICATION DE L'ANGLE D'AFFICHAGE D'UN DISPOSITIF DE FONCTIONNEMENT ET D'AFFICHAGE D'UN TEL DISPOSITIF DE FONCTIONNEMENT DE VÉHICULE

(30) Priorität: 31.08.2018 DE 102018121271
(43) Veröffentlichungstag der Anmeldung: 04.03.2020
(73) Patentinhaber: ZF CV Systems Europe BV, 1170 Brussels (BE)
(72) Erfinder: LAUDE, Ulf, 29313 Hambühren (DE); SCHMIDT, Frank, 88400 Biberach (DE)
(74) Vertreter: Rabe, Dirk-Heinrich

(56) Entgegenhaltungen:
- WO-A1-2017/173432
- WO-A1-2018/068860
- DE-A1-102006 039 765

## Beschreibung

Die Erfindung betrifft eine Fahrzeugbedienvorrichtung mit einer Bedien- und Anzeigeeinrichtung zum Ausführen von Steuerfunktionen an einem Fahrzeug sowie ein Verfahren zum Ändern des Anzeigewinkels einer am Fahrzeug montierten oder zu montierenden Bedien- und Anzeigeeinrichtung einer derartigen Fahrzeugbedienvorrichtung.

Eine Fahrzeugbedienvorrichtung der eingangs genannten Art ist bspw. aus EP 2 057 031 B1 bekannt und wird nachfolgend anhand von beigefügter Fig. 1 erläutert, die eine Bedienvorrichtung 10 für ein Anhängerfahrzeug zeigt. Sie wird am Rahmen des Anhängerfahrzeugs befestigt und dient dazu, Betriebsfunktionen des Anhängers zu steuern. Die zu steuernden Funktionen können unter anderem ein elektronisches Bremssystem (EBS), eine zentrale Anhängerelektronik (Trailer Central Electronic (TCE)) oder die elektronische Luftfederung im Anhängerfahrzeug (Electronically Controlled Air Suspension System (ECAS)) und dergleichen mehr sein. Im Rahmen dieser Betriebsfunktionen sind zahlreiche Steuerungsfunktionen auszuführen.

Diese Bedienvorrichtung 10 umfasst eine Bedien- und Anzeigeeinrichtung 12 mit einer Anzeige 14 und drei Bedienelementen 16, 18, 20. Die Bedien- und Anzeigeeinrichtung 12 weist Befestigungsmittel 22 auf, die mit Bohrungen 24, 26 zur Aufnahme von Befestigungsschrauben versehen sind, mittels denen die Bedienvorrichtung 10 am Fahrzeugrahmen befestigt wird.

Die Oberfläche der Bedien- und Anzeigeeinrichtung 12 einschließlich der Anzeige 14 ist gegenüber der Horizontalen geneigt.

Die Neigung der Oberfläche der Bedien- und Anzeigeeinrichtung 12 und der Anzeige 14 ist aber nicht für alle Anwendungsfälle geeignet. Weist das Fahrzeug bspw. einen Fahrzeugrahmen auf, der höher ist als üblich, ist die Oberfläche der Bedien- und Anzeigeeinrichtung 12 und insbesondere der Anzeige 14 nur schwer oder gar nicht mehr abzulesen. Der Bediener muss dann entweder auf den Fahrzeugrahmen steigen oder Hilfsmittel zur Erlangung einer höheren Standposition, wie bspw. eine Leiter, heranziehen. Hieraus können sich aber Gefahrensituationen, insbesondere für den Bediener, ergeben.

Der Erfindung liegt daher die Aufgabe zu Grunde, die Bedienbarkeit von Fahrzeugbedienvorrichtungen der eingangs genannten Art zu verbessern.

Die Erfindung löst diese Aufgabe mit den Merkmalen einer Fahrzeugbedienvorrichtung mit einer Bedien- und Anzeigeeinrichtung zum Ausführen von Steuerfunktionen am Fahrzeug gemäß Anspruch 1 sowie mit einem Verfahren zum Ändern des Anzeigewinkels einer am Fahrzeug montierten oder zu montierenden Bedien- und Anzeigeeinrichtung einer derartigen Fahrzeugbedienvorrichtung mit den Merkmalen gemäß Anspruch 12.

Eine erfindungsgemäße Fahrzeugbedienvorrichtung weist daher eine erste Halterung und eine zweite Halterung auf, welche mit der Bedien- und Anzeigeeinrichtung an deren rechten Seite und deren linken Seite lösbar verbindbar sind. Hierzu ist eine der rechten Seite zugeordnete erste Positionier- und Verbindungseinrichtung und eine der linken Seite zugeordnete zweite Positionier- und Verbindungseinrichtung vorgesehen, wobei die Bedien- und Anzeigeeinrichtung mittels der Halterungen in zwei sich voneinander unterscheidenden Anzeigewinkeln montierbar ist und zwar durch Vertauschung der beiden Halterungen.

Dank der Erfindung ist es daher mit einfachen Mitteln möglich, den Winkel der Bedien- und Anzeigeeinrichtung zu verändern. Dazu müssen lediglich die beiden Halterungen gegeneinander vertauscht werden. Bspw. kann der Anzeigewinkel in einer Weise verändert werden, dass die Bedien- und Anzeigeeinrichtung senkrecht bzw. im Wesentlichen senkrecht oder bspw. in einem Winkel von 45° gegenüber der Horizontalen steht. Dies ermöglicht, die Fahrzeugbedienvorrichtung auch an höheren Positionen am Fahrzeug zu montieren, ohne dass dadurch die Sichtbarkeit der Anzeige bzw. die Bedienbarkeit von Bedienelementen der Bedien- und Anzeigeeinrichtung substantiell beeinträchtigt wird.

Eine steiler stehende Bedien- und Anzeigeeinrichtung erlaubt insbesondere auch eine bessere Sichtbarkeit der Anzeige durch eine geringere Blendung durch Sonnenlicht. Die Ablesbarkeit und Bedienbarkeit einer derartigen Bedien- und Anzeigeeinrichtung kann somit verbessert werden und zwar sowohl bei einer Montage der Fahrzeugbedienvorrichtung an einer höheren Position als auch bei einer Blendung infolge reflektierenden Sonnenlichts auf der Oberfläche der Bedien- und Anzeigeeinrichtung. Die Erfindung erlaubt daher die Bedienbarkeit von Bedien- und Anzeigeeinrichtungen bei Fahrzeugbedienvorrichtungen zu verbessern, ohne dabei auf aufwändige Konstruktionen und Hilfsmittel zurückgreifen zu müssen.

Bei dem Fahrzeug handelt es sich beispielsweise um ein Anhängerfahrzeug. Alternativ handelt es sich bei dem Fahrzeug um ein Zugfahrzeug oder ein anderes Nutzfahrzeug.

Bei der Bedien- und Anzeigeeinrichtung handelt es sich bspw. um eine Anzeige mit einem oder mehreren Bedienelementen und/oder um einen berührungsempfindlichen Bildschirm (Touchscreen).

Vorteilhafterweise beträgt der erste Anzeigewinkel 30° bis 60°, insbesondere 45°, zur Horizontalen, so dass die Anzeigeoberfläche der Bedien- und Anzeigeeinrichtung um diesen ersten Anzeigewinkel gegenüber der Horizontalen geneigt ist. Dabei ist der zweite Anzeigewinkel größer als der erste Anzeigewinkel gewählt und beträgt bspw. 70° bis 90°, insbesondere 90°, zur Horizontalen. Dadurch ist beim zweiten Anzeigewinkel die Anzeigeoberfläche der Bedien- und Anzeigeeinrichtung stärker gegenüber der Horizontalen geneigt als beim ersten Anzeigewinkel. Es ergeben sich somit zwei deutlich unterscheidbare Winkelpositionen für die Anzeigeoberfläche der Bedien- und Anzeigeeinrichtung, wodurch eine flexible Anpassung an unterschiedliche Montagepositionen, insbesondere Montagehöhen, am Fahrzeug ermöglicht wird.

Bei einer vorteilhaften Weiterbildung der Erfindung sind die erste Halterung und die zweite Halterung zueinander bezüglich ihrer jeweiligen horizontalen Mittelebene symmetrisch, insbesondere spiegelsymmetrisch. Eine derartige Symmetrie/Spiegelsymmetrie bezüglich der Mittelebenen ist vorteilhaft für ein einfaches Vertauschen der Halterungen, da keine speziellen Werkzeuge oder Adapter von Nöten sind, um den Anzeigewinkel zu verändern, sondern lediglich die erste Halterung und die zweite Halterung gegeneinander zu vertauschen sind.

Gemäß einer Weiterbildung der Erfindung weist die erste Positionier- und Verbindungseinrichtung ein in der Bedien- und Anzeigeeinrichtung angeordnetes erstes Riegelelement mit einem, insbesondere rechteckigen, Querschnitt auf, der wenigstens eine Symmetrielinie, insbesondere Spiegelsymmetrielinie, aufweist, die eine Parallele zur Anzeigeoberfläche der Bedien- und Anzeigeeinrichtung in einem Winkel γ schneidet.

Der Winkel γ ergibt sich dabei als Betrag der halben Winkeldifferenz der beiden Anzeigewinkel.

Ferner weist dabei die zweite Positionier- und Verbindungseinrichtung ein in der Bedien- und Anzeigeeinrichtung angeordnetes zweites Riegelelement mit gleichem Querschnitt wie das erste Riegelelement auf, dessen wenigstens eine Symmetrielinie, insbesondere Spiegelsymmetrielinie, eine Parallele zur Anzeigeoberfläche der Bedien- und Anzeigeeinrichtung im Winkel γ schneidet.

Dabei weist jede der beiden Positionier- und Verbindungseinrichtungen an jeweils einer der beiden Halterungen jeweils ein an den Querschnitt der Riegelelemente angepasstes Loch zur Aufnahme des jeweiligen Riegelelements auf. Jedes der beiden Löcher weist einen, insbesondere rechteckigen, Querschnitt auf, der wenigstens eine Symmetrielinie, insbesondere Spiegelsymmetrielinie, aufweist, die eine Senkrechte zur horizontalen Mittelebene der jeweiligen Halterung im Winkel γ schneidet.

Diese Ausbildung erlaubt eine besonders einfache und daher kostengünstige Realisierung der Vertauschbarkeit der Halterungen zur Erzielung von zwei unterschiedlichen Anzeigewinkeln.

Eine Weiterbildung der Erfindung sieht vor, dass jedes der Riegelelemente mit einem querab zum jeweiligen Riegelelement abstehenden Fortsatz verbunden oder verbindbar ist und/oder jedes der Riegelelemente eine von außerhalb der Bedien- und Anzeigeeinrichtung zugängliche Ausnehmung zur Aufnahme eines Werkzeugs aufweist, um das Riegelelement von einer entriegelten Position in eine verriegelte Position und umgekehrt verschieben zu können. Dies gewährleistet eine einfache Montage und einen einfachen Umbau der Bedien- und Anzeigeeinrichtung zwischen den verschiedenen Anzeigewinkeln. Die genannte Ausnehmung kann bspw. eine Vertiefung bzw. ein Schlitz sein, in den ein Schraubendreher hineingesteckt werden kann, um das Riegelelement zu verschieben. Ebenso kann aber auch ein Fortsatz am Riegelelement dazu genutzt werden, das Riegelelement mittels eines Schraubendrehers, eines anderen Werkzeugs oder von Hand zu verschieben.

Gemäß einer Weiterbildung der Erfindung sind die Riegelelemente von der Rückseite der Bedien- und Anzeigeeinrichtung bedienbar. Somit sind die Riegelelemente nicht direkt sichtbar, wenn eine Person vor der am Fahrzeug montierten Fahrzeugbedienvorrichtung steht. Die Riegelelemente sind insofern versteckt angeordnet, so dass einem Diebstahl vorgebaut wird.

Eine Weiterbildung der Erfindung sieht vor, dass an der Rückseite der Bedien- und Anzeigeeinrichtung ein elektrischer Anschluss, insbesondere ein HDSCS (Heavy Duty Sealed Connector Series)-Verbinder, insbesondere ein HDSCS-Stecker oder eine HDSCS-Buchse, vorgesehen ist. Somit ist auch der elektrische Anschluss nicht direkt sichtbar, wenn eine Person vor einer am Fahrzeug montierten Fahrzeugbedienvorrichtung steht. Dies reduziert die Wahrscheinlichkeit, dass Personen, bspw. Jugendliche aus Übermut oder aus einem spontanen Entschluss heraus, die elektrische Verbindung zwischen dem Fahrzeug und der Fahrzeugbedienvorrichtung durch Abziehen eines Steckers aus dem elektrischen Anschluss unterbrechen.

Gemäß einer Weiterbildung der Erfindung ist an der Rückseite der Bedien- und Anzeigeeinrichtung ein Batteriefach vorgesehen, insbesondere für eine wiederaufladbare Batterie. Somit ist auch keine direkte Sichtbarkeit des Batteriefaches gegeben, wenn eine Person vor einer am Fahrzeug montierten Fahrzeugbedienvorrichtung steht. Hierdurch wird die Wahrscheinlichkeit reduziert, dass die Batterie entwendet wird.

Eine Weiterbildung der Erfindung sieht vor, dass das Batteriefach einen Deckel mit integrierter Dichtung und/oder Versiegelung aufweist, um vor Nässe und unsachgemäßem Batterietausch zu schützen.

Gemäß einer Weiterbildung der Erfindung weist das Batteriefach zwei Steckplätze zur Aufnahme von jeweils einer Batteriezelle auf, wobei die Fahrzeugbedienvorrichtung wahlweise mit einer oder zwei Batteriezellen betreibbar ist. Bei einer Ausstattung mit nur einer Batteriezelle ergibt sich eine kostengünstige Variante. Demgegenüber ist eine Ausstattung mit zwei Batteriezellen vorteilhaft, da dadurch die Kapazität und somit die Lebensdauer vergrößert wird. Insbesondere bei nachlassender Batteriekapazität durch Batteriealterung kann somit eine Wartung hinausgeschoben werden.

Eine Weiterbildung der Erfindung sieht vor, dass die Anzeigeoberfläche der Bedien- und Anzeigeeinrichtung von einer schwenkbaren Schutzklappe abdeckbar ist, wobei die Schutzklappe in zwei Positionen arretierbar ist, die derart gewählt sind, dass die Schutzklappe in aufgeklappter Stellung senkrecht steht. Eine stets senkrecht ausrichtbare Schutzklappe reduziert die Gefahr, dass die Schutzklappe deshalb beschädigt werden kann, da sie über eine seitliche Begrenzungsebene des Fahrzeugs hinausragt. Die Schutzklappe ist nämlich in einer senkrechten Stellung in einem regelmäßig unproblematischen Bereich des Fahrzeugs untergebracht.

Die o.g. Aufgabe wird zudem durch ein Verfahren zum Ändern des Anzeigewinkels einer am Fahrzeug montierten oder zu montierenden Bedien- und Anzeigeeinrichtung einer Fahrzeugbedienvorrichtung der vorgenannten Art gelöst, welches folgende Schritte umfasst:
- Entriegeln der ersten Positionier- und Verbindungseinrichtung und Lösen der ersten Halterung vom Fahrzeug und von der Bedien- und Anzeigeeinrichtung,
- Entriegeln der zweiten Positionier- und Verbindungseinrichtung und Lösen der zweiten Halterung vom Fahrzeug und von der Bedien- und Anzeigeeinrichtung,
- Vertauschen von erster und zweiter Halterung,
- Verriegeln von erster und zweiter Positionier- und Verbindungseinrichtung,
- Montage von erster und zweiter Halterung am Fahrzeug.

In der Zeichnung zeigen:
- Fig. 1: eine Fahrzeugbedienvorrichtung gemäß dem Stand der Technik;
- Fig. 2: ein Ausführungsbeispiel einer erfindungsgemäßen Fahrzeugbedienvorrichtung mit einer Bedien- und Anzeigeeinrichtung und zwei Halterungen, von denen nur eine dargestellt ist, nämlich die an der rechten Seite der Bedien- und Anzeigeeinrichtung vorgesehene Halterung, in einer Seitenansicht, wobei die Bedien- und Anzeigeeinrichtung und die Halterung noch nicht miteinander verbunden sind;
- Fig. 3: die Fahrzeugbedienvorrichtung gemäß Fig. 2, wobei die Bedien- und Anzeigeeinrichtung und die Halterung bereits miteinander verbunden sind und die Bedien- und Anzeigeeinrichtung einen ersten Anzeigewinkel einnimmt;
- Fig. 4: die Fahrzeugbedienvorrichtung gemäß Fig. 2 bzw. 3, wobei gegenüber den Figuren 2 und 3 die beiden Halterungen vertauscht sind und daher die andere der beiden Halterungen dargestellt ist, wiederum in einer Seitenansicht, wobei die Bedienund Anzeigeeinrichtung und die Halterung noch nicht miteinander verbunden sind;
- Fig. 5: die Fahrzeugbedienvorrichtung gemäß Fig. 4, wobei die Bedien- und Anzeigeeinrichtung und die Halterung bereits miteinander verbunden sind und die Bedien- und Anzeigeeinrichtung einen zweiten Anzeigewinkel einnimmt;
- Fig. 6: die Fahrzeugbedienvorrichtung gemäß Fig. 3 in einer Ansicht von unten;
- Fig. 7: die Fahrzeugbedienvorrichtung gemäß Fig. 5 mit einer Schutzklappe, die um 180° senkrecht nach oben aufgeklappt ist und
- Fig. 8: die Fahrzeugbedienvorrichtung gemäß Fig. 3, ebenfalls mit senkrecht nach oben aufgeklappter Schutzklappe, jedoch nur um 135° aufgeklappt.

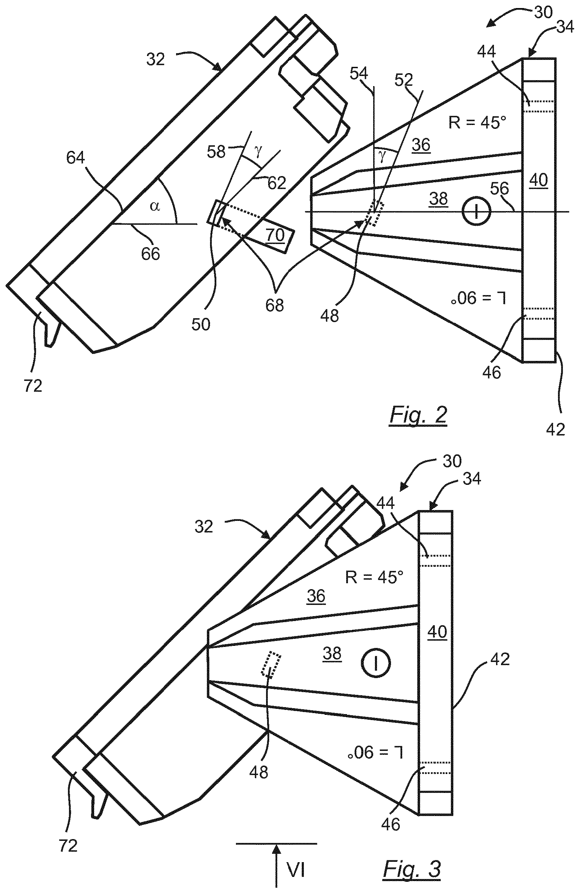

Figuren 2 und 3 zeigen ein Ausführungsbeispiel einer erfindungsgemäßen Fahrzeugbedienvorrichtung 30 mit einer Bedien- und Anzeigeeinrichtung 32 und zwei Halterungen, von denen - aufgrund der Darstellung in einer Seitenansicht und zwar von der rechten Seite aus betrachtet - nur eine erste Halterung 34 dargestellt ist.

Die Halterung 34 weist eine Seitenwand 36 auf, die durch eine Verdickung 38 versteift ist.

Die Halterung 34 weist ferner eine Stirnwand 40 mit einer Stirnfläche 42 auf, die bei einer Montage der Fahrzeugbedienvorrichtung 30 an einem Fahrzeug mit dem Fahrzeug in Kontakt gelangt. Die Stirnwand weist zwei durchgehende Löcher 44, 46 zur Aufnahme von Befestigungsschrauben zur Befestigung der Halterung 34 bspw. an einem Rahmen des Fahrzeugs auf.

Die Halterung 34 weist ferner ein Loch 48 mit rechteckigem Querschnitt auf, welches zur Bedien- und Anzeigeeinrichtung 32 hin geöffnet ist und zur Aufnahme eines nur in Fig. 2 dargestellten ersten Riegelelements 50 dient, welches in der Bedien- und Anzeigeeinrichtung 32 angeordnet ist.

Der rechteckige Querschnitt des Lochs 48 weist eine Spiegelsymmetrielinie 52 auf, die eine Senkrechte 54 zur horizontalen Mittelebene 56 der Halterung 34 im Winkel γ schneidet.

Das erste Riegelelement 50 weist ebenfalls einen rechteckigen Querschnitt auf, der an den rechteckigen Querschnitt des Lochs 48 angepasst ist, jedoch geringfügig kleiner als der rechteckige Querschnitt des Lochs 48 ist. Der Querschnitt des Riegelelements 50 weist eine Spiegelsymmetrielinie 58 auf, die eine Parallele 62 zur Anzeigeoberfläche 64 der Bedien- und Anzeigeeinrichtung 32 im Winkel γ schneidet.

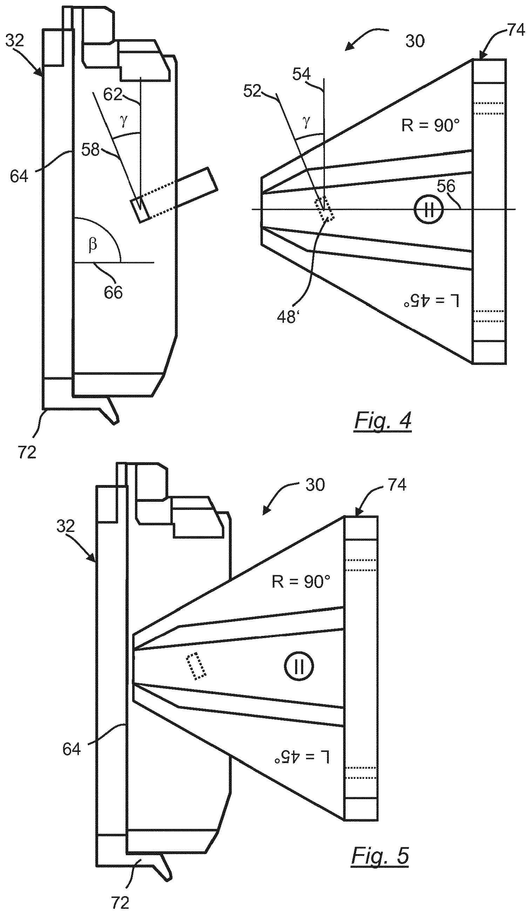

Der Winkel γ ergibt sich dabei als Betrag der halben Winkeldifferenz zwischen dem ersten Anzeigewinkel α, der in Fig. 2 dargestellt ist, und dem zweiten Anzeigewinkel β, der in Fig. 4 dargestellt ist. Der Anzeigewinkel α bzw. β ist der Winkel der Anzeigeoberfläche 64 gegenüber der Horizontalen 66.

In den Figuren 2 und 3 beträgt der erste Anzeigewinkel α 45°.

In den Figuren 4 und 5 beträgt der zweite Anzeigewinkel β 90°.

Das Riegelelement 50 bildet zusammen mit dem Loch 48 eine erste Positionier- und Verbindungseinrichtung 68.

An dem Riegelelement 50 ist ein Fortsatz 70 vorgesehen, der eine Verschiebung des Riegelelements 50 zwischen einer entriegelten Position und einer verriegelten Position ermöglicht.

Die Bedien- und Anzeigeeinrichtung 32 sieht auf ihrer Anzeigeoberfläche 64 eine Anzeige sowie ein oder mehrere Bedienelemente und/oder einen berührungsempfindlichen Bildschirm vor, um Informationen darzustellen und Eingaben vom Bediener anzunehmen.

Die Bedien- und Anzeigeeinrichtung 32 umfasst ferner eine Schutzklappe 72, die in den Figuren 2 und 3 geschlossen dargestellt ist, sich jedoch durch Aufklappen öffnen lässt.

Die Bauteile der Figuren 4 und 5 entsprechen weitestgehend den in den Figuren 2 und 3 dargestellten Bauteilen, wobei jedoch in den Figuren 4 und 5 statt der ersten Halterung 34 eine zweite Halterung 74 dargestellt ist.

Die zweite Halterung 74 entspricht jedoch weitgehend der ersten Halterung 34, wobei sich die Halterung 74 aus einer Spiegelung entlang der horizontalen Mittelebene 56 der ersten Halterung 34 ergibt. Daher sind die erste Halterung 34 und die zweite Halterung 74 zueinander in Bezug auf ihre jeweilige horizontale Mittelebene 56 spiegelsymmetrisch ausgebildet.

Das Loch 48' der zweiten Halterung 74 ist daher ebenfalls gegenüber der Senkrechten 54 geneigt, jedoch in anderer Richtung.

Aufgrund dieser Anordnung des Loches 48' ergibt sich im montierten Zustand der Bedien- und Anzeigeeinrichtung 32 an erster Halterung 34 (in den Figuren 4 und 5 nicht dargestellt) und zweiter Halterung 74 gemäß den Figuren 4 und 5 ein zweiter Anzeigewinkel β, d.h. eine andere Ausrichtung der Anzeigeoberfläche 64 der Bedien- und Anzeigeeinrichtung 32.

Wie bereits oben ausgeführt, beträgt bei den Figuren 4 und 5 der zweite Anzeigewinkel β 90°, so dass die Anzeigeoberfläche 64 der Bedien- und Anzeigeeinrichtung 32 senkrecht ausgerichtet ist.

In den Darstellungen gemäß den Figuren 4 und 5 ist die Schutzklappe 72 ebenfalls geschlossen dargestellt; sie lässt sich auch bei dieser Montage durch Aufklappen öffnen.

In den Figuren 3 bis 5 ist die erste Halterung 34 jeweils mit einem Symbol, bspw. einer I in einem Kreis, und die zweite Halterung 74 mit einem anderen Symbol, bspw. einer II in einem Kreis, versehen. Dies erleichtert die Montage, da somit die im Übrigen sehr ähnlich ausgebildeten Halterungen ohne Weiteres unterscheidbar sind.

Zusätzlich oder alternativ sind die erste Halterung 34 und die zweite Halterung 74 mit Angaben zum Anzeigewinkel in Abhängigkeit einer Montage rechts oder links gekennzeichnet. In den Figuren 2 und 3 ist insofern die erste Halterung 34 mit der Angabe R = 45° sowie der auf dem Kopf stehenden Angabe L = 90° versehen. Diese Angaben signalisieren dem Monteur, dass sich bei einer Montage der ersten Halterung 34 auf der rechten Seite der Fahrzeugbedienvorrichtung 30 ein Anzeigewinkel von 45° ergibt. Ist für den Monteur jedoch die Angabe L = 90° richtig herum lesbar, befindet sich diese erste Halterung 34 auf der linken Seite der Fahrzeugbedienvorrichtung 30 und es stellt sich ein Anzeigewinkel von 90° ein.

In den Figuren 4 und 5 ist die zweite Halterung 74 mit der Angabe R = 90° sowie der auf dem Kopf stehenden Angabe L = 45° versehen. Diese Angaben signalisieren, dass sich bei einer Montage der zweiten Halterung 74 auf der rechten Seite der Fahrzeugbedienvorrichtung 30 ein Anzeigewinkel von 90° ergibt. Ist für den Monteur jedoch die Angabe L = 45° richtig herum lesbar, befindet sich diese zweite Halterung 74 auf der linken Seite der Fahrzeugbedienvorrichtung, so dass sich ein Anzeigewinkel von 45° einstellt.

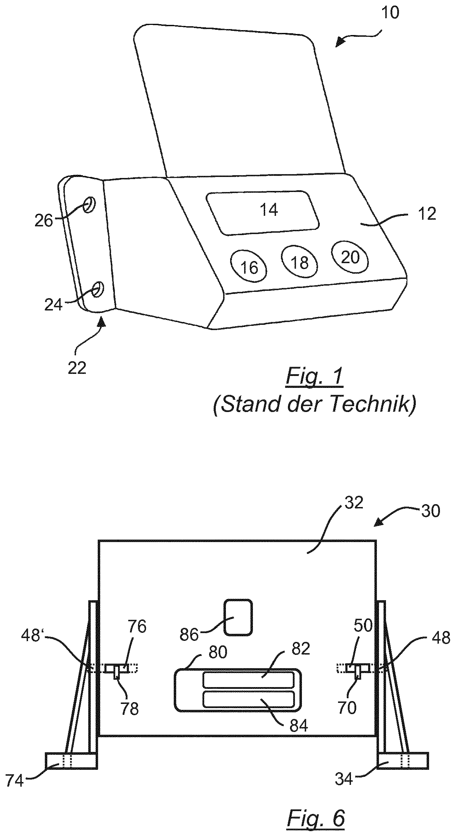

Vorstehend wurden die Löcher 48 und 48' sowie das Riegelelement 50 jeweils mit rechteckigem aneinander angepasstem Querschnitt beschrieben. Es sind jedoch auch andere aneinander angepasste Querschnittsformen möglich, wie bspw. dreieckige, viereckige, fünfeckige, etc. sowie ovale oder andere Querschnitte. Dies gilt auch für ein spiegelbildlich auf der linken Seite der Bedien- und Anzeigeeinrichtung 32 vorgesehenes zweites Riegelelement 76 (vgl. Fig. 6).

Fig. 6 zeigt die Fahrzeugbedienvorrichtung 30 in einem Montagezustand gemäß Fig. 3 in einer Ansicht von unten, wie in Fig. 3 durch den Pfeil VI dargestellt.

Auf der rechten Seite der in Fig. 6 dargestellten Fahrzeugbedienvorrichtung 30 ist neben der Bedien- und Anzeigeeinrichtung 32 die erste Halterung 34 angebracht und mittels des Riegelelements 50 verriegelt.

Auf der linken Seite der in Fig. 6 dargestellten Fahrzeugbedienvorrichtung 30 ist neben der Bedien- und Anzeigeeinrichtung 32 die zweite Halterung 74 angebracht und mittels eines zweiten Riegelelements 76 verriegelt.

Das zweite Riegelelement 76 ist ebenfalls mit einem Fortsatz 78 versehen. Das zweite Riegelelement 76 bildet mit dem Loch 48' der zweiten Halterung 74 eine zweite Positionier- und Verbindungseinrichtung 79.

Auf der Unterseite der Bedien- und Anzeigeeinrichtung 32 befindet sich ferner ein Batteriefach 80 zur Aufnahme von, insbesondere wiederaufladbaren, Batteriezellen 82, 84.

Ferner befindet sich auf der Unterseite der Bedien- und Anzeigeeinrichtung 32 ein elektrischer Anschluss 86, beispielsweise ein HDSCS-Verbinder, zum elektrischen Anschließen der Bedien- und Anzeigeeinrichtung 32. Über den elektrischen Anschluss 86 können die Batteriezellen 82, 84 geladen werden. Außerdem dient dieser elektrische Anschluss 86 der Übertragung elektrischer Steuerungsignale an das Fahrzeug und die Fahrzeugkomponenten.

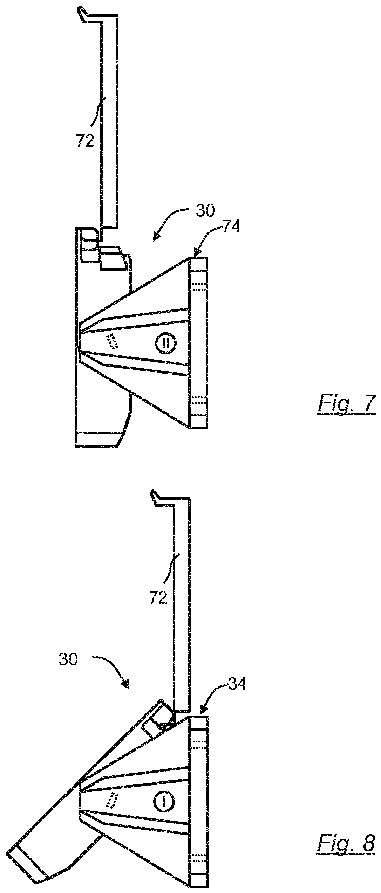

Fig. 7 zeigt die in Fig. 5 dargestellte Fahrzeugbedienvorrichtung 30, wobei jedoch die Schutzklappe 72 um 180° aufgeklappt dargestellt ist, so dass die Schutzklappe 72 senkrecht steht.

Fig. 8 zeigt die in Fig. 3 dargestellte Fahrzeugbedienvorrichtung 30, wobei die Schutzklappe 72 um 135° aufgeklappt dargestellt ist, so dass auch hier die Schutzklappe 72 senkrecht steht.

Die Schutzklappe 72 ist zu diesem Zweck an der Bedien- und Anzeigeeinrichtung 32 derart angelenkt befestigt, dass sie in geöffneter Position in zwei Stellungen arretiert, nämlich entweder in der 135°-Stellung oder in der 180°-Stellung.

Insgesamt ermöglicht die Erfindung eine unkomplizierte Änderung des Anzeigewinkels der Bedien- und Anzeigeeinrichtung 32, wenn sie am Fahrzeug montiert ist, indem die Positionier- und Verbindungseinrichtungen 68 und 79 entriegelt und die Halterungen 34, 74 vom Fahrzeug und von der Bedien- und Anzeigeeinrichtung 32 gelöst werden, anschließend die Halterungen 34, 74 gegeneinander vertauscht werden und anschließend die Positionier- und Verbindungseinrichtung 68, 79 wieder verriegelt werden und die Halterungen 34, 74 am Fahrzeug montiert werden.

### Bezugszeichenliste (Bestandteil der Beschreibung)

- 10: Bedienvorrichtung
- 12: Bedien- und Anzeigeeinrichtung
- 14: Anzeige
- 16: Bedienelement
- 18: Bedienelement
- 20: Bedienelement
- 22: Befestigungsmittel
- 24: Bohrung
- 26: Bohrung
- 30: Fahrzeugbedienvorrichtung
- 32: Bedien- und Anzeigeeinrichtung
- 34: erste Halterung
- 36: Seitenwand
- 38: Verdickung
- 40: Stirnwand
- 42: Stirnfläche
- 44: Loch zur Aufnahme einer Befestigungsschraube
- 46: Loch zur Aufnahme einer Befestigungsschraube
- 48, 48': Loch
- 50: erstes Riegelelement
- 52: Symmetrielinie
- 54: Senkrechte
- 56: horizontale Mittelebene
- 58: Spiegelsymmetrielinie
- 60: Senkrechte
- 62: Parallele
- 64: Anzeigeoberfläche
- 66: Horizontale
- 68: erste Positionier- und Verbindungseinrichtung
- 70: Fortsatz
- 72: Schutzklappe
- 74: zweite Halterung
- 76: zweites Riegelelement
- 78: Fortsatz
- 79: zweite Positionier- und Verbindungseinrichtung
- 80: Batteriefach
- 82: Batteriezelle
- 84: Batteriezelle
- 86: elektrischer Anschluss

## Patentansprüche

1. Fahrzeugbedienvorrichtung mit einer Bedien- und Anzeigeeinrichtung (32) zum Ausführen von Steuerfunktionen am Fahrzeug, wobei eine erste Halterung (34) und eine zweite Halterung (74), welche mit der Bedien- und Anzeigeeinrichtung (32) an deren rechten Seite und deren linken Seite lösbar verbindbar sind und zwar mittels einer deren rechten Seite zugeordneten ersten Positionier- und Verbindungseinrichtung (68) und einer deren linken Seite zugeordneten zweiten Positionier- und Verbindungseinrichtung (79),
**dadurch gekennzeichnet, dass**
die Bedien- und Anzeigeeinrichtung (32) mittels der Halterungen (34, 74) in zwei sich voneinander unterscheidenden Anzeigewinkeln (α, β) montierbar ist und zwar durch Vertauschung der beiden Halterungen (34, 74).

2. Fahrzeugbedienvorrichtung nach Anspruch 1,
**dadurch gekennzeichnet, dass**
der erste Anzeigewinkel (α) 30° bis 60° zur Horizontalen (66) beträgt, so dass die Anzeigeoberfläche (64) der Bedien- und Anzeigeeinrichtung (32) um diesen ersten Anzeigewinkel (α) gegenüber der Horizontalen (66) geneigt ist, und der zweite Anzeigewinkel (β) größer ist als der erste Anzeigewinkel (α), bspw. 70° bis 90° zur Horizontalen (66) beträgt, so dass die Anzeigeoberfläche (64) der Bedien- und Anzeigeeinrichtung (32) stärker gegenüber der Horizontalen (66) geneigt ist als beim ersten Anzeigewinkel (α).

3. Fahrzeugbedienvorrichtung nach Anspruch 1 oder 2,
**dadurch gekennzeichnet, dass**
die erste Halterung (34) und die zweite Halterung (74) zueinander in Bezug auf ihre jeweilige horizontale Mittelebene (56) spiegelsymmetrisch sind.

4. Fahrzeugbedienvorrichtung nach einem der vorhergehenden Ansprüche,
**dadurch gekennzeichnet, dass**
die erste Positionier- und Verbindungseinrichtung (68) ein in der Bedien- und Anzeigeeinrichtung (32) angeordnetes erstes Riegelelement (50) mit einem Querschnitt aufweist, der wenigstens eine Symmetrielinie (58) aufweist, die eine Parallele (62) zur Anzeigeoberfläche (64) der Bedien- und Anzeigeeinrichtung (32) in einem Winkel γ schneidet,
wobei die zweite Positionier- und Verbindungseinrichtung (79) ein in der Bedien- und Anzeigeeinrichtung (32) angeordnetes zweites Riegelelement (76) mit gleichem Querschnitt wie das erste Riegelelement (50) aufweist, dessen wenigstens eine Symmetrielinie eine Parallele (62) zur Anzeigeoberfläche (64) der Bedien- und Anzeigeeinrichtung (32) im Winkel γ schneidet,
wobei jede der beiden Positionier- und Verbindungseinrichtungen (68, 79) an jeweils einer der beiden Halterungen (34, 74) jeweils ein an den Querschnitt der Riegelelemente (50, 76) angepasstes Loch (48, 48') zur Aufnahme des jeweiligen Riegelelements (50, 76) aufweist,
wobei jedes der beiden Löcher (48, 48') einen Querschnitt aufweist, der wenigstens eine Symmetrielinie (52) aufweist, die eine Senkrechte (54) zur horizontalen Mittelebene (56) der jeweiligen Halterung (34, 74) im Winkel γ schneidet,
wobei der Winkel γ der Betrag der halben Winkeldifferenz der beiden Anzeigewinkel (α, β) ist.

5. Fahrzeugbedienvorrichtung nach Anspruch 4,
**dadurch gekennzeichnet, dass**
jedes der Riegelelemente (50, 76) mit einem querab zum Riegelelement (50, 76) abstehenden Fortsatz (70, 78) verbunden oder verbindbar ist und/oder jedes der Riegelelemente (50, 76) eine von außerhalb der Bedien- und Anzeigeeinrichtung (32) zugängliche Ausnehmung zur Aufnahme eines Werkzeugs aufweist,
um das Riegelelement (50, 76) von einer entriegelten Position in eine verriegelte Position und umgekehrt verschieben zu können.

6. Fahrzeugbedienvorrichtung nach Anspruch 5,
**dadurch gekennzeichnet, dass**
die Riegelelemente (50, 76) von der Rückseite der Bedien- und Anzeigeeinrichtung (32) bedienbar sind.

7. Fahrzeugbedienvorrichtung nach einem der vorhergehenden Ansprüche,
**dadurch gekennzeichnet, dass**
an der Rückseite der Bedien- und Anzeigeeinrichtung (32) ein elektrischer Anschluss (86) vorgesehen ist.

8. Fahrzeugbedienvorrichtung nach einem der vorhergehenden Ansprüche,
**dadurch gekennzeichnet, dass**
an der Rückseite der Bedien- und Anzeigeeinrichtung (32) ein Batteriefach (80) vorgesehen ist.

9. Fahrzeugbedienvorrichtung nach Anspruch 8,
**dadurch gekennzeichnet, dass**
das Batteriefach (80) einen Deckel mit integrierter Dichtung und/oder Versiegelung aufweist.

10. Fahrzeugbedienvorrichtung nach Anspruch 8 oder 9,
**dadurch gekennzeichnet, dass**
das Batteriefach (80) zwei Steckplätze zur Aufnahme von jeweils einer Batteriezelle (82, 84) aufweist, wobei die Fahrzeugbedienvorrichtung (30) wahlweise mit einer oder zwei Batteriezellen (82, 84) betreibbar ist.

11. Fahrzeugbedienvorrichtung nach einem der vorhergehenden Ansprüche,
**dadurch gekennzeichnet, dass**
die Anzeigeoberfläche (64) der Bedien- und Anzeigeeinrichtung (32) von einer schwenkbaren Schutzklappe (72) abdeckbar ist, wobei die Schutzklappe (72) in zwei Positionen arretierbar ist, die derart gewählt sind, dass die Schutzklappe (72) in aufgeklappter Stellung senkrecht steht.

12. Verfahren zum Ändern des Anzeigewinkels (α, β) einer an einem Fahrzeug montierten oder zu montierenden Bedien- und Anzeigeeinrichtung (32) einer Fahrzeugbedienvorrichtung (30) nach einem der Ansprüche 1 bis 11 mit folgenden Schritten:
a) Entriegeln der ersten Positionier- und Verbindungseinrichtung (68) und Lösen der ersten Halterung (34) vom Fahrzeug und von der Bedien- und Anzeigeeinrichtung (32),
b) Entriegeln der zweiten Positionier- und Verbindungseinrichtung (79) und Lösen der zweiten Halterung (74) vom Fahrzeug und von der Bedien- und Anzeigeeinrichtung (32),
c) Vertauschen von erster und zweiter Halterung (34, 74),
d) Verriegeln von erster und zweiter Positionier- und Verbindungseinrichtung (68, 79),
e) Montage von erster und zweiter Halterung (34, 74) am Fahrzeug.

## Claims

1. A vehicle control device having an operating and display device (32) for executing control functions on the vehicle, wherein a first holder (34) and a second holder (74), which are detachably connectable to the operating and display device (32) on their right side and their left side, specifically by means of a first positioning and connection device (68) assigned to their right side and a second positioning and connection device (79) assigned to their left side,
**characterized in that**
the operating and display device (32) is mountable by means of the holders (34, 74) at two display angles (α, β) differing from each other, specifically by interchanging the two holders (34, 74).

2. The vehicle control device according to claim 1,
**characterized in that**
the first display angle (α) is 30° to 60° to the horizontal (66), so that the display surface (64) of the operating and display device (32) is inclined by this first display angle (α) vis-à-vis the horizontal (66), and the second display angle (β) is greater than the first display angle (α), for example 70° to 90° to the horizontal (66), so that the display surface (64) of the operating and display device (32) is more strongly inclined vis-à-vis the horizontal (66) than in the case of the first display angle (α).

3. The vehicle control device according to claim 1 or 2,
**characterized in that**
the first holder (34) and the second holder (74) are mirror-symmetrical to each other with respect to their respective median horizontal plane (56).

4. The vehicle control device according to any of the foregoing claims,
**characterized in that**
the first positioning and connection device (68) has a first locking element (50) arranged in the operating and display device (32) with a cross-section that has at least one line of symmetry (58), which intersects a parallel line (62) to the display surface (64) of the operating and display device (32) at a γ angle,
wherein the second positioning and connection device (79) has a second locking element (76) arranged in the operating and display device (32) with the same cross-section as the first locking element (50), whose at least one line of symmetry intersects a parallel line (62) to the display surface (64) of the operating and display device (32) at a γ angle,
wherein each of the two positioning and connection devices (68, 79) each have a hole (48, 48') adapted to the cross-section of the locking elements (50, 76) at one of the two holders (34, 74) for receiving the respective locking element (50, 76),
wherein each of the two holes (48, 48') has a cross-section which has at least one line of symmetry (52), which intersects a vertical line (54) to the median horizontal plane (56) of the respective holder (34, 74) at a γ angle ,
wherein the γ angle is the amount of the half angle difference of the two display angles (α, β).

5. The vehicle control device according to claim 4,
**characterized in that**
each of the locking elements (50, 76) is connected or connectable to an extension (70, 78) protruding abreast to the locking element (50, 76) and/or **in that** each of the locking elements (50, 76) has a recess accessible from outside of the operating and display device (32) for accommodating a tool, in order to be able to shift the locking element (50, 76) from an unlocked position into a locked position and vice versa.

6. The vehicle control device according to claim 5,
**characterized in that**
the locking elements (50, 76) can be operated from the rear side of the operating and display device (32).

7. The vehicle control device according to any of the foregoing claims,
**characterized in that**
an electrical connection (86) is provided at the rear side of the operating and display device (32).

8. The vehicle control device according to any of the foregoing claims,
**characterized in that**
a battery compartment (80) is provided at the rear side of the operating and display device (32).

9. The vehicle control device according to claim 8,
**characterized in that**
the battery compartment (80) has a cover with integrated gasket and/or seal.

10. The vehicle control device according to claim 8 or 9,
**characterized in that**
the battery compartment (80) has two slots for receiving one battery cell (82, 84) each, wherein the vehicle control device (30) can be operated optionally with one or two battery cells (82, 84) .

11. The vehicle control device according to any of the foregoing claims,
**characterized in that**
the display surface (64) of the operating and display device (32) can be covered by a pivotable protective flap (72), wherein the protective flap (72) is lockable in two positions, which are selected such that the protective flap (72) is perpendicular in folded out position.

12. A method for modifying the display angle (α, β) of an operating a display device (32) of a vehicle control device (30) mounted or to be mounted on a vehicle according to any of claims 1 to 11, having the following steps:
a) Unlocking the first positioning and connection device (68) and releasing the first holder (34) from the vehicle and from the operating and display device (32),
b) Unlocking the second positioning and connection device (79) and releasing the second holder (74) from the vehicle and from the operating and display device (32),
c) Interchanging the first and second holder (34, 74),
d) Locking of first and second positioning and connection device (68, 79),
e) Installation of first and second holder (34, 74) on the vehicle.

## Revendications

1. Dispositif de commande de véhicule avec un équipement de commande et de visualisation (32) pour exécuter des fonctions de pilotage au niveau du véhicule, dans lequel un premier support (34) et un second support (74), lesquels sont reliés de façon amovible à l'équipement de commande et de visualisation (32) sur son côté droit et son côté gauche, en l'occurrence au moyen d'un premier équipement de positionnement et de liaison (68) attribué à son côté droit et d'un second équipement de positionnement et de liaison (79) attribué à son côté gauche,
**caractérisé en ce que**
l'équipement de commande et de visualisation (32) peut être monté au moyen des supports (34, 74) selon deux angles de visualisation (α, β) qui se différencient l'un de l'autre, en l'occurrence par permutation des deux supports (34, 74).

2. Dispositif de commande de véhicule selon la revendication 1,
**caractérisé en ce que**
le premier angle de visualisation (α) est de 30° à 60° par rapport à l'horizontale (66), de sorte que la surface de visualisation (64) de l'équipement de commande et de visualisation (32) soit inclinée selon ce premier angle de visualisation (α) par rapport à l'horizontale (66), et le second angle de visualisation (β) est plus grand que le premier angle de visualisation (α), il est par exemple de 70° à 90° par rapport à l'horizontale (66), de sorte que la surface de visualisation (64) de l'équipement de commande et de visualisation (32) soit plus fortement inclinée par rapport à l'horizontale (66) qu'avec le premier angle de visualisation (α).

3. Dispositif de commande de véhicule selon la revendication 1 ou 2,
**caractérisé en ce que**
le premier support (34) et le second support (74) sont en symétrie spéculaire l'un par rapport l'autre s'agissant de leur plan médian (56) horizontal respectif.

4. Dispositif de commande de véhicule selon l'une des revendications précédentes,
**caractérisé en ce que**
le premier équipement de positionnement et de liaison (68) présente un premier élément de verrouillage (50), agencé dans l'équipement de commande et de visualisation (32), avec une section transversale qui présente au moins une ligne de symétrie (58) qui croise une parallèle (62) à la surface de visualisation (64) de l'équipement de commande et de visualisation (32) selon un angle γ,
dans lequel le second équipement de positionnement et de liaison (79) présente un second élément de verrouillage (76), agencé dans l'équipement de commande et de visualisation (32), avec la même section transversale que le premier élément de verrouillage (50), dont la au moins une ligne de symétrie croise une parallèle (62) à la surface de visualisation (64) de l'équipement de commande et de visualisation (32) selon un angle γ,
dans lequel chacun des deux équipements de positionnement et de liaison (68, 79) présente respectivement un trou (48, 48') adapté à la section transversale des éléments de verrouillage (50, 76) contre respectivement l'un des deux supports (34; 74) pour le logement de l'élément de verrouillage (50, 76) respectif,
dans lequel chacun des deux trous (48, 48') présente une section transversale qui présente au moins une ligne de symétrie (52) qui croise une perpendiculaire (54) au plan médian (56) horizontal du support (34, 74) respectif,
dans lequel l'angle γ est la somme de la demi-différence angulaire des deux angles de visualisation (α, β).

5. Dispositif de commande de véhicule selon la revendication 4,
**caractérisé en ce que**
chacun des éléments de verrouillage (50, 76) est ou peut être relié à un prolongement (70, 78) qui dépasse transversalement vers le bas par rapport à l'élément de verrouillage (50, 76) et/ou chacun des éléments de verrouillage (50, 76) présente un évidement accessible depuis l'extérieur de l'équipement de commande et de visualisation (32) pour le logement d'un outil, afin de pouvoir décaler l'élément de verrouillage (50, 76) d'une position déverrouillée vers une position verrouillée et inversement.

6. Dispositif de commande de véhicule selon la revendication 5,
**caractérisé en ce que**
les éléments de verrouillage (50, 76) peuvent être actionnés depuis le côté arrière de l'équipement de commande et de visualisation (32).

7. Dispositif de commande de véhicule selon l'une des revendications précédentes,
**caractérisé en ce que**
un raccordement électrique (86) est prévu contre le côté arrière de l'équipement de commande et de visualisation (32).

8. Dispositif de commande de véhicule selon l'une des revendications précédentes,
**caractérisé en ce que**
un compartiment pour batterie (80) est prévu contre le côté arrière de l'équipement de commande et de visualisation (32).

9. Dispositif de commande de véhicule selon la revendication 8,
**caractérisé en ce que**
le compartiment pour batterie (80) présente un couvercle avec une garniture d'étanchéité et/ou un scellement intégré (e) .

10. Dispositif de commande de véhicule selon la revendication 8 ou 9,
**caractérisé en ce que**
le compartiment pour batterie (80) présente deux emplacements d'enfichage pour le logement de respectivement une cellule de batterie (82, 84), dans lequel le dispositif de commande de véhicule (30) peut être entraîné sélectivement avec une ou deux cellules de batterie (82, 84).

11. Dispositif de commande de véhicule selon l'une des revendications précédentes,
**caractérisé en ce que**
la surface de visualisation (64) de l'équipement de commande et de visualisation (32) peut être recouverte par un clapet de protection (72) pivotant, dans lequel le clapet de protection (72) peut être bloqué dans deux positions qui sont sélectionnées de telle sorte que le clapet de protection (72) soit perpendiculaire en position relevée.

12. Procédé de modification de l'angle de visualisation (α, β) d'un équipement de commande et de visualisation (32), monté ou à monter contre un véhicule, d'un dispositif de commande de véhicule (30) selon l'une des revendications 1 à 11 avec les étapes suivantes :
a) déverrouillage du premier équipement de positionnement et de liaison (68) et libération du premier support (34) depuis le véhicule et l'équipement de commande et de visualisation (32),
b) déverrouillage du second équipement de positionnement et de liaison (79) et libération du second support (74) depuis le véhicule et l'équipement de commande et de visualisation (32),
c) permutation du premier et du second support (34, 74) depuis le véhicule,
d) verrouillage du premier et du second équipement de positionnement et de liaison (68, 79),
e) montage du premier et du second support (34, 74) contre le véhicule.
